# EUROPÄISCHE PATENTANMELDUNG

(11) **EP 2 583 597 A1**
(43) Veröffentlichungstag der Anmeldung: **24.04.2013**
(21) Anmeldenummer: 11185570.6
(22) Anmeldetag: 18.10.2011
(51) Int. Cl.: A47J 37/06, A47J 37/07

(54) **Feuerfester Grillgutträger**

(71) Anmelder: Buck, Ernest, 22397 Hamburg (DE)
(72) Erfinder: Buck, Ernest, 22397 Hamburg (DE)
(74) Vertreter: Glawe, Delfs, Moll

(57) **Zusammenfassung**

Die Erfindung betrifft einen feuerfesten Grillgutträger. Der Grillgutträger weist eine Wellenform mit Wellentälern auf, die in Form und Abmessung zur Aufnahme von Grillwürstchen angepasst sind.

## Beschreibung

Die Erfindung betrifft einen Grillgutträger zur Aufnahme von Brat- bzw. Grillwürsten.

Grillgutträger sind aus offenkundiger Vorbenutzung bekannt. Diese sind üblicherweise in Gitterform ausgebildet, auf denen das Grillgut oberhalb der Hitzequelle platziert wird. Bei dem Grillen von Grillgut mit geringer Eigenstabilität wie Würstchen mit hohem Fettanteil und dünner (Natur-)Darmhülle stellt sich das Problem, dass diese Würste auf dem Grill auflageflächenseitig durch die sie tragende Gitterstruktur ungleichmäßig erwärmt werden und "durchhängen". Diese punktuell ungleichmäßige Erwärmung und übermäßige Beugung der Würste führt beim Wenden im Grillprozess zu einem bevorzugten Reißen oder Brechen in diesen überstrapazierten Bereichen der Wurst.

Ebenfalls bekannt ist die Verwendung von Grillschalen, deren Zweck darin besteht, die gesundheitlichen Auswirkungen der Dämpfe von in die Wärmequelle abtropfendem Fett aus dem Grillgut zu vermeiden. Die Grillschalen haben eine rippenartige Struktur mit erhabenen Auflageabschnitten bzw. Punkten und in Breitenrichtung jeweils dazwischen liegende abgesenkte Sättel bzw. Rinnen, in denen sich das abtropfende Fett sammeln kann. Auch bei den Grillschalen stellt sich das Problem, dass die Würste nur punktuell gestützt werden. Wenn die Würste auf den Auflageabschnitten, d.h. den Kämmen der Rippen aufliegen, hängen diese bei geringer Wursteigenstabilität ebenfalls durch. Bedingt durch die Aufeinanderfolge von auf der Grillschale aufliegenden und nicht aufliegenden Bereichen der Wurstunterseite, wird diese ebenfalls unterschiedlich stark erwärmt. Im Ergebnis führt dies ebenfalls zu einem bevorzugten Reißen oder Brechen in diesen überstrapazierten und ungleichmäßig erwärmten Bereichen der Wurst beim Wenden oder Abheben.

Die Erfindung hat erkannt, dass die oben beschriebenen Nachteile in besonders starkem Maße bei Bratwürsten mit einer Länge von mehr als 15 cm auftreten und insbesondere bei Würsten mit geringer Eigenstabilität anzutreffen sind, die neben Wurstbrät auch Fisch, Meeresfrüchte oder Krebstiere enthalten, wie in der Anmeldung EP 11 177 372.7 beschrieben.

Die Erfindung sucht Wege, diese Nachteile zu vermeiden. Sie zielt dabei insbesondere auf einen Grillgutträger ab, der Bratwürste mit geringer Eigenstabilität beim Grillen auf dem Grillgutträger korsettartig stützt, d.h. eine punktuelle Überbelastung an der Wurstauflagefläche vermeidet und gleichzeitig eine gleichmäßige Erwärmung der der Wärmequelle zugewandten Wurst(-unter-)seite zulässt.

Die Erfindung löst diese Aufgaben durch einen feuerfesten Grillgutträger gemäß Anspruch 1, der ebenfalls Bestandteil eines Kits gemäß Anspruch 10 und Bestandteil eines Grills gemäß Anspruch 13 sein kann. Vorteilhafte Ausführungsformen der Erfindung sind in den Unteransprüchen offenbart.

Zunächst seien einige im Rahmen der Erfindung verwendete Begriffe erläutert.

"Feuerfester Grillgutträger" bezeichnet eine geeignete Auflagefläche für Grillgut, insbesondere Bratwürstchen, die der bei Grillgeräten üblichen Einsatztemperatur widersteht, die bis zu 270° C oder höher betragen kann. Derartige Materialien sind aus dem Stand der Technik bekannt. Der erfindungsgemäße Grillgutträger kann ganz oder teilweise aus mindestens einem Material, ausgewählt aus der Gruppe bestehend aus: Metall, Legierungen von Edelstählen, beschichteten Stählen, Gusseisen, Aluminium, Aluguss, Glas, Keramik oder hitzefesten Kunststoffen hergestellt sein. Von besonderem Vorteil ist es, wenn der Grillgutträger auf der dem Grillgut zugewandten Seite der Wellentäler ganz oder teilweise mit einer Antihaftbeschichtung, weiter vorzugsweise mit einer PTFE (Polytetrafluorethylen)-Beschichtung (auch unter dem Markennamen Teflon® bekannt), versehen ist. Diese Beschichtung wirkt dem Anbacken der Grillwürstchen am Grillgutträger entgegen und erlaubt es, den Einsatz von aufzutragendem Öl und dergleichen als Grillhilfsmittel zu minimieren.

Der erfindungsgemäße feuerfeste Grillgutträger weist eine Wellenform mit entsprechenden Wellentälern auf. Die Wellentäler wechseln sich mit Wellenbergen ab, die kürzer und steiler oder länger und flacher als die Wellentäler sein können. Die Wellen können als Querwellen oder als Kreiswellen ausgebildet sein, d.h. die senkrecht zu den Wellefronten verlaufenden Wellennormalen, welche die Ausbreitungsrichtung der Wellen angeben, verlaufen parallel zu einander bzw. sind vom Zentrum des Wellenfeldes nach außen gerichtet. Die Geometrie der Wellentäler ist erfindungsgemäß in Form und Abmessung zur Aufnahme von Grillwürstchen angepasst. Die Wellentäler nehmen korsettartig die Grillwürstchen auf, die sich mit ihrer Unterseite und den sich an die Unterseite angrenzenden Seitenflächen an die Wellentäler anlehnen können. Gemäß einer bevorzugten Ausführungsform der Erfindung sind die Wellentäler des Grillgutträgers in Form und Abmessung zur Aufnahme der Grillwürstchen so angepasst, dass sie die Unterseite und die Seitenflächen bis auf halbe Höhe der Grillwurst kontaktieren.

Die Geometrie der Wellenform des erfindungsgemäßen Grillgutträgers kann unterschiedlich ausgestaltet sein. Gemäß einer bevorzugten Ausführungsform der Erfindung sind die Wellenberge höchstens halb so hoch wie die dazwischen liegenden Wellentäler, wodurch ein leichter Zugriff auf die in den Wellentälern liegenden Grillwürstchen möglich ist. Verschiedene Dimensionierung der Wellentäler und Wellenberge sind möglich, beispielsweise die nachfolgend bevorzugt genannten, wonach die Höhe des Wellenbergscheitelpunkts ausgewählt ist aus der Gruppe bestehend aus 0,25-1,50 cm, 0,375-1,00 cm und 0,5-0,75 cm, und die Höhe des Wellentalscheitelpunkts ausgewählt ist aus der Gruppe bestehend aus 0,5-3,00 cm, 0,75-2,00 cm und 1,00-1,50 cm. Ebenfalls ist eine sinusförmige Wellenform möglich, beispielsweise mit einer Amplitude von 0,5-3,00 cm, vorzugsweise 0,75-2,00 cm, besonders bevorzugt 1,00-1,50 cm. Die Wellenbreite zwischen den Scheitelpunkten benachbarter Wellentäler kann beispielsweise 1,00-6,00 cm, vorzugsweise 1,50-4,00 cm, weiter vorzugsweise 2,00-3,00 cm betragen.

Der erfindungsgemäße Grillgutträger umfasst eine Vielzahl an Wellentälern zur Aufnahme einer entsprechenden Anzahl von Grillwürstchen. So kann der Grillgutträger 2-30, vorzugsweise 3-20, weiter vorzugsweise 4-15, besonders bevorzugt 5-10 Wellentäler aufweisen. Besonders bevorzugt ist es, wenn die Wellentäler zur Aufnahme einer entsprechenden Anzahl von Grillwürstchen parallel zueinander verlaufen. In diesem Fall ist es von besonderem Vorteil, wenn die Wellentäler von einem Ende zum anderen Ende konisch zulaufen, da dadurch die Grillwurst beim Grillen am konisch breiteren Ende mit dem Wendegerät, beispielsweise einer Grillzange, leichter umfasst und damit schonender gewendet oder von Grillträger abgenommen werden kann. Bei begrenztem Platz auf dem Grillgutträger kann es von Vorteil sein, benachbarte konisch zulaufende Wellentäler gegeneinander wechselseitig versetzt anzuordnen, so dass das konisch aufspreizende Ende eines ersten Wellentals neben dem benachbarten konisch zulaufenden Ende eines zweiten Wellentals angeordnet ist.

Die Wellentäler des erfindungsgemäßen Grillgutträgers sind so eingerichtet, dass sie die Grillwürstchen vollständig in ihrer gesamten Länge aufnehmen können. Da die Länge der Grillbratwürste über die für (Fleisch-)Bratwürste übliche maximale Länge von 25 cm hinausgehen und beispielsweise bis zu 60 cm betragen kann (s. beispielsweise die in der EP 11 177 372.7 beschriebenen Fisch-Fleisch-Bratwürste), sind die Wellentäler von entsprechender Länge. Gemäß einer bevorzugten Ausführungsform der Erfindung umfasst mindestens eines der die Grillwurst aufnehmenden Wellentäler eine Länge von mehr als 15 cm, vorzugsweise mehr als 20 cm, weiter vorzugsweise mehr als 25 cm, weiter vorzugsweise mehr als 30 cm besonders bevorzugt mehr als 35 cm. Die Länge der Wellentäler kann bei 70 cm begrenzt sein und sollte bei dem erfindungemäßen Grillgutträger mit Querwellen kleiner 65 cm, vorzugsweise kleiner 60 cm, weiter vorzugsweise kleiner 55 cm, weiter vorzugsweise kleiner 50 cm betragen.

Gemäß einem weiteren Aspekt der Erfindung kann mindestens eines der Wellentäler des Grillgutträgers mindestens einen Durchbruch und/oder einen Bereich mit einer höheren Wärmeleitfähigkeit aufweisen, so dass eine den Durchbruch oder den Bereich mit einer höheren Wärmeleitfähigkeit kontaktierende Grillwurst beim Grillen an dieser Stelle einem erwünschten Branding unterliegt. Ein solches Branding kann beispielsweise ein Logo, eine Marke, eine Produktbezeichnung oder Herstellerangabe sein. Beim Grillen wird demnach der gegenüber der Wärmequelle freiliegende Bereich der Grillwurst bzw. der Wursthüllenbereich, der auf dem Bereich des Wellentals mit erhöhter Wärmeleitfähigkeit liegt, kontrolliert einer erhöhten Wärmezuleitung ausgesetzt und damit im stärkeren Maße angebräunt.

Gegenstand vorliegender Erfindung ist des Weiteren ein Kit, der zusätzlich zu dem oben beschriebenen Grillgutträger eine Grillbürste mit mindestens einen Bürstenkopf umfasst. Die Grillbürste dient zum Reinigen des Grillgutträgers, insbesondere zum Abtragen von gegebenenfalls verbliebenen Rückständen in den Wellentälern nach oder während des Grillvorgangs. Für eine besonders effektive Reinigung ist der Bürstenkopf der Grillbürste vorzugsweise in Form und Abmessung an mindestens eines der Wellentäler des Grillgutträgers im Querschnitt angepasst und/oder passt sich beim Eintauchen in das Wellental dessen Form an. Der Bürstenkopf kann aus verschiedensten zum mechanischen Abtragen von Grillrückständen geeigneten Materialien bestehen, beispielsweise aus Metalldraht, Metallfasern oder Metallwolle.

Ein weiterer Gegenstand vorliegender Erfindung ist ein Grill, vorzugsweise ein Gasgrill, der den erfindungsgemäßen Grillgutträger oder den oben beschriebenen Kit umfasst.

Von besonderem Vorteil ist es, wenn der Grillgutträger auf dem Grill repositionierbar angeordnet ist. Dadurch kann der Grillträger vom Grill abgenommen und gesäubert werden (z.B. in einer Spülmaschine) bevor er wiederverwendet wird. Ein weiterer Vorteil besteht darin, dass bei entsprechender Normierung bzw. Abstimmung der Halterungen von Grill und korrespondierendem Grillgutträger verschiedene Grillgutträger für ein und denselben Grill verwendet werden können. So können unterschiedliche Grillgutträger verwendet werden, deren Wellentälergeometrie auf verschiedene Grillwürstchen abgestimmt ist. Selbst eine Umstellung während des Grillvorgangs ist möglich, wenn auf eine andere Grillwurstform bzw. Länge umgestiegen wird.

Nachfolgend wird die Erfindung anhand von Beispielen näher erläutert.
- Figur 1: zeigt schematisch einen Grillgutträger gemäß einer ersten Ausführungsform der Erfindung in der Draufsicht;
- Figur 2: zeigt schematisch einen Grillgutträger gemäß einer zweiten Ausführungsform der Erfindung im Querschnitt quer zur Wellenstruktur.
- Figur 3: zeigt schematisch eine im Grillgutträger gemäß Figur 1 gegrillte Bratwurst.

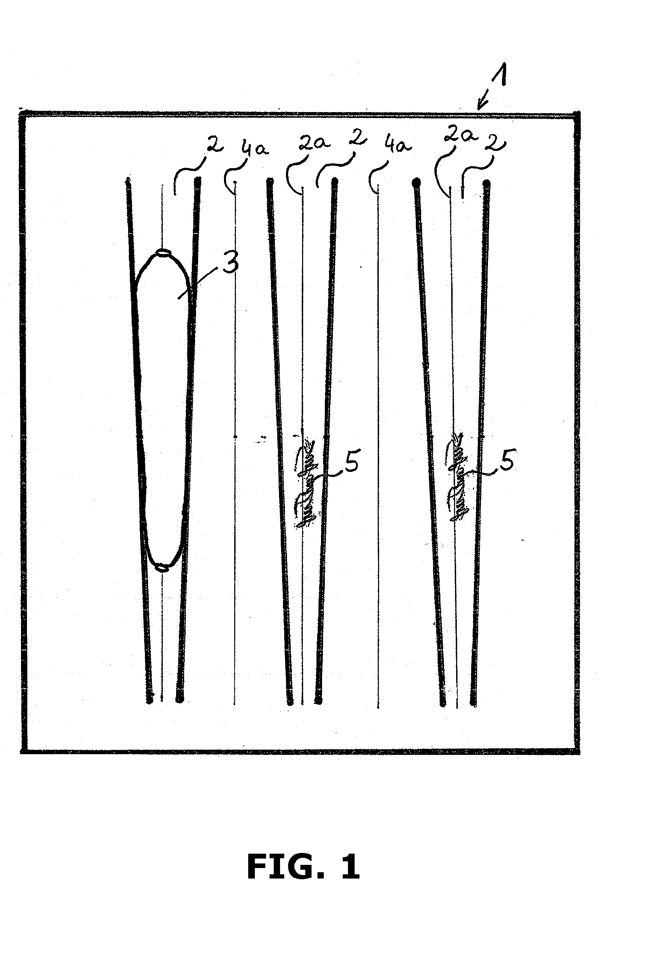

Figur 1 zeigt in der Draufsicht einen quadratischen Grillgutträger 1 gemäß einer ersten Ausführungsform der Erfindung. Der Grillgutträger 1 weist Querwellen auf. Die Querwellen umfassen drei parallel verlaufende und konisch zulaufende Wellentäler 2 mit dazwischen liegenden Wellenbergen 4 mit ihren Wellenbergscheitelpunkten 4a. Eines der randständigen Wellentäler 2 nimmt korsettartig ein Grillwürstchen 3 in gesamter Länge auf. Die Wellentäler 2 weisen einen Durchbruch 5 in Form des Spiegelschriftschriftzuges "Surf and Turf" auf, der in dem ersten Wellental 2 von der im Wellental 2 liegenden Wurst 3 verdeckt wird.

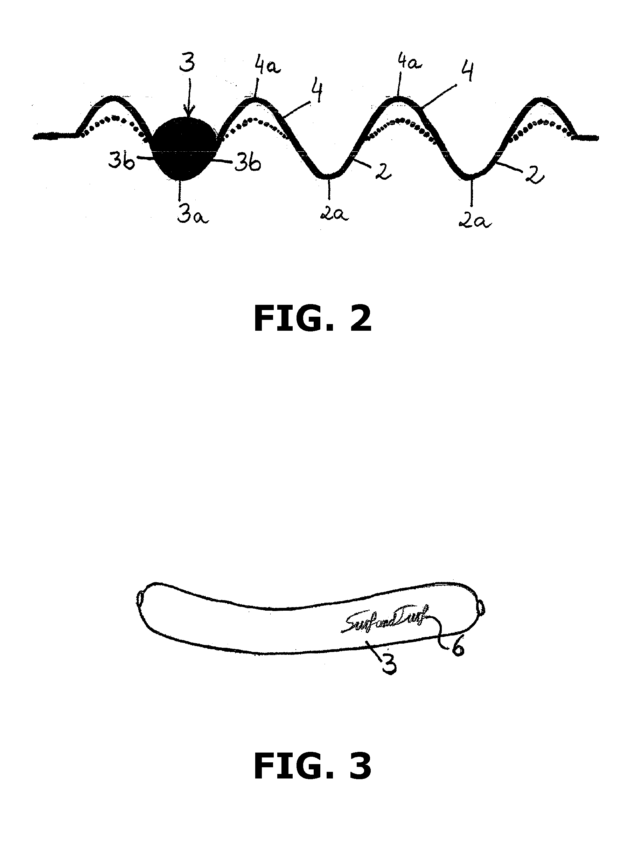

Figur 2 zeigt schematisch einen Grillgutträger 1 gemäß einer zweiten Ausführungsform der Erfindung im Querschnitt. Die Geometrie der Wellenform ist eine sinusförmige Wellenform mit gleichmäßiger Breite zwischen den Wellenbergen 4a und den Wellentälern 2a, bei der die Wellenberge 4 genauso hoch (durchgezogene Linie) oder halb so hoch (gepunktete Linie) wie die dazwischen liegenden Wellentäler 2 sind. Eine im ersten Wellental 2 liegende Grillwurst 3 lehnt sich an das Wellental 2 an und kontaktiert das Wellental 2 mit seiner Unterseite 3a und den Seitenflächen 3b bis etwa auf halbe Höhe der Grillwurst 3.

Figur 3 zeigt schematisch eine im Grillgutträger 1 gemäß Figur 1 gegrillte Bratwurst 3, deren in Figur 1 verdeckte Auflagefläche 3a in Figur 3 frontal sichtbar ist. Das Negativ des Durchbruchs 5 im Wellental 2 des Grillgutträgers 1 ist in der Grillwurst 3 nach dem Grillen in Form des Brandings 6, d.h. des stärker gebräunten Schriftzuges "Surf and Turf" sichtbar.

## Patentansprüche

1. Feuerfester Grillgutträger (1) in Wellenform, **dadurch gekennzeichnet, dass** der wellenförmige Grillgutträger (1) Wellentäler (2) aufweist, die an die Form und Abmessung zur Aufnahme von Grillwürstchen (3) angepasst sind.

2. Grillgutträger (1) nach Anspruch 1, **dadurch gekennzeichnet, dass** der Grillgutträger (1) 2-30, vorzugsweise 3-20, weiter vorzugsweise 4-15, besonders bevorzugt 5-10 parallel verlaufende Wellentäler (2) zur Aufnahme einer entsprechenden Anzahl von Grillwürstchen (3) aufweist.

3. Grillgutträger (1) nach einem der vorangehenden Ansprüche, **dadurch gekennzeichnet, dass** die Wellentäler (2) in Form und Abmessung zur Aufnahme der Grillwürstchen (3) so angepasst sind, dass sie die Unterseite (3a) und die Seitenflächen (3b) bis auf halbe Höhe der Grillwurst (3) kontaktieren.

4. Grillgutträger (1) nach einem der vorangehenden Ansprüche, **dadurch gekennzeichnet, dass** die Geometrie der Wellenform
a) höchstens halb so hohe Wellenberge (4) wie Wellentäler (2) aufweist, vorzugsweise mit einem Wellenbergscheitelpunkt (4a) ausgewählt aus der Gruppe bestehend aus 0,25-1,50 cm, 0,375-1,00 cm und 0,5-0,75 cm, und einem Wellentalscheitelpunkt (2a) ausgewählt aus der Gruppe bestehend aus 0,5-3,00 cm, 0,75-2,00 cm und 1,00-1,50 cm, oder
b) eine sinusförmige Wellenform mit einer bevorzugten Amplitude von 0,5-3,00 cm, weiter vorzugsweise 0,75-2,00 cm, besonders bevorzugt 1,00-1,50 cm ist.

5. Grillgutträger (1) nach einem der vorangehenden Ansprüche, **dadurch gekennzeichnet, dass** die Wellenbreite zwischen den Scheitelpunkten (2a) benachbarter Wellentäler (2) 1,00-6,00 cm, vorzugsweise 1,50-4,00 cm, weiter vorzugsweise 2,00-3,00 cm ist.

6. Grillgutträger (1) nach einem der vorangehenden Ansprüche, **dadurch gekennzeichnet, dass** der Grillgutträger (1)
- aus mindestens einem Material, ausgewählt aus der Gruppe bestehend aus: Metall, Legierungen von Edelstählen, beschichtete Stähle, Gusseisen, Aluminium, Aluguss, Glas, Keramik oder hitzefeste Kunststoffe vollständig oder teilweise hergestellt ist, und
- vorzugsweise auf der dem Grillgut zugewandten Seite der Wellentäler (2) ganz oder teilweise mit einer Antihaftbeschichtung, weiter vorzugsweise mit einer PTFE (Polytetrafluorethylen)-Beschichtung, versehen ist.

7. Grillgutträger (1) nach einem der vorangehenden Ansprüche, **dadurch gekennzeichnet, dass** mindestens eines der Wellentäler (2) mindestens einen Durchbruch und/oder einen Bereich mit einer höheren Wärmeleitfähigkeit (6) aufweist, so dass eine den Durchbruch oder den Bereich mit einer höheren Wärmeleitfähigkeit (5) kontaktierende Grillwurst (3) beim Grillen an dieser Stelle einem erwünschten Branding (6) unterliegt.

8. Grillgutträger (1) nach einem der vorangehenden Ansprüche, **dadurch gekennzeichnet, dass** mindestens eines der die Grillwurst (3) aufnehmenden Wellentäler (2) eine Länge von mehr als 15 cm, vorzugsweise mehr als 20 cm, weiter vorzugsweise mehr als 25 cm, weiter vorzugsweise mehr als 30 cm, besonders bevorzugt mehr als 35 cm aufweist.

9. Grillgutträger (1) nach einem der vorangehenden Ansprüche, **dadurch gekennzeichnet, dass** mindestens eines der Wellentäler (2), vorzugsweise mehr als zwei Wellentäler (2) konisch zulaufend sind, wobei benachbarte konisch zulaufende Wellentäler (2) vorzugsweise wechselseitig in Bezug auf ihre zulaufenden Wellentäler (2) angeordnet sind.

10. Kit umfassend einen Grillgutträger (1) nach einem der vorangehenden Ansprüche und eine Grillbürste mit mindestens einem Bürstenkopf.

11. Kit nach Anspruch 10, **dadurch gekennzeichnet, dass** der Bürstenkopf in Form und Abmessung an mindestens eines der Wellentäler (2) des Grillgutträgers (1) im Querschnitt angepasst ist oder sich beim Eintauchen in das Wellental (2) dessen Form anpasst.

12. Kit nach Anspruch 10 oder 11, **dadurch gekennzeichnet, dass** der Bürstenkopf Metalldraht, Metallfasern oder Metallwolle zum Abtragen von Bratrückständen in den Wellentälern (2) des Grillgutträgers (1) umfasst.

13. Grill umfassend einen Grillgutträger (1) nach einem der Ansprüche 1-9 oder einen Kit nach einem der Ansprüche 10-12.

14. Grill nach Anspruch 13, **dadurch gekennzeichnet, dass** der Grill ein Gasgrill ist.

15. Grill nach Anspruch 13 oder 14, **dadurch gekennzeichnet, dass** der Grillgutträger (1) auf dem Grill repositionierbar angeordnet ist.
